Europäisches Patentamt

European Patent Office

Office européen des brevets

(19)

(11) Numéro de publication: **0 168 374 B1**

# FASCICULE DE BREVET EUROPEEN

(12)

(45) Date de publication de fascicule du brevet:
27.03.91

(51) Int. Cl.⁵: **B44B 3/04**, B23K 26/00, B21B 27/00

(21) Numéro de dépôt: 85870096.6

(22) Date de dépôt: 09.07.85

(54) Procédé de marquage d'un objet métallique cylindrique, tel qu'un cylindre de laminoir.

(30) Priorité: 11.07.84 LU 85463

(43) Date de publication de la demande:
15.01.86 Bulletin 86/03

(45) Mention de la délivrance du brevet:
27.03.91 Bulletin 91/13

(84) Etats contractants désignés:
AT DE FR GB IT SE

(56) Documents cités:
BE-A- 870 609
US-A- 2 768 393
US-A- 3 534 472

(73) Titulaire: CENTRE DE RECHERCHES METAL-
LURGIQUES CENTRUM VOOR RESEARCH IN
DE METALLURGIE Association sans but lucratif
Vereniging zonder winstoogmerk Rue Montoyer, 47
B-1040 Bruxelles(BE)

(72) Inventeur: Defraye, René
20, rue en Bois
B-4000 Liège(BE)
Inventeur: Crahay, Jean
Ster 334
B-4878 Francorchamps(BE)
Inventeur: Bragard, Adolphe
76, Chemin des Crêtes
B-4050 Esneux(BE)

(74) Mandataire: Lacasse, Lucien Emile et al
CENTRE DE RECHERCHES METALLURGI-
QUES Abbaye du Val-Benoît 11, rue Ernest
Solvay
B-4000 Liège(BE)

## Description

La présente invention concerne un procédé de marquage d'un objet métallique cylindrique, tel qu'un cylindre de laminoir.

A titre purement illustratif, la description qui suit se rapporte à la formation d'une rugosité contrôlée à la surface d' un cylindre de laminoir, rugosité qui est ensuite transférée à la surface de la tôle laminée au moyen de ce cylindre. Selon un procédé actuellement bien connu, on peut former cette rugosité contrôlée, c'est-à-dire marquer la surface du cylindre, au moyen d'un faisceau d'impulsions laser, qui balaye la surface du cylindre.

par son brevet belge n° 870.609, le présent demandeur a déjà proposé un procédé et un dispositif permettant de réaliser un tel marquage en déplaçant, le long d'un cylindre mis en rotation, une tête de marquage renvoyant en le focalisant sur la surface du cylindre, un faisceau laser émis parallèlement à l'axe du cylindre par un émetteur fixe.

A l'expérience, il est cependant apparu que ce procédé présentait encore certains inconvénients essentiellement dus à l'utilisation d'une tête de marquage mobile associée à un émetteur laser fixe. On a en effet constaté que le faisceau laser n'était pas parfaitement parallèle, et qu'un raison de sa divergence, il était de plus en plus difficile de maintenir un point focal de dimension adéquate sur la surface du cylindre à mesure que la tête de marquage s'éloigne de l'émetteur laser. Ce défaut peut évidemment être corrigé au moyen d'une lentille appropriée disposée par exemple à la sortie de l'émetteur laser, afin de rendre le faisceau parallèle. Cette solution apparemment simple s'avère pourtant délicate à réaliser en raison du degré de précision optique à atteindre et à maintenir.

D'autre part, les miroirs réfléchissants eux-mêmes présentent des défauts, accentués par l'échauffement sous l'impact du faisceau énergétique, et introduisent des aberrations dans le faisceau réfléchi.

La présente invention a pour objet un procédé permettant de remédier à ces inconvénients.

Elle est basée sur la constatation faite par le demandeur, qu' il est possible de réaliser le mouvement relatif de la tête de marquage par rapport à la surface à marquer tout en maintenant constante la longueur de la trajectoire du faisceau laser et en évitant l'emploi de miroirs réfléchissants.

A cet effet, le procédé qui fait l'objet de la présente invention, est essentiellement caractérisé en ce que l'on émet un faisceau énergétique dont l'axe coupe l'axe de l'objet cylindrique sous une incidence sensiblement perpendiculaire, en ce que l'on focalise le dit faisceau sur la surface du dit objet cylindrique, et en ce que l'on met le dit objet cylindri que en translation le long de son axe longitudinal.

Selon une mise en oeuvre intéressante du procédé de l'invention, on synchronise les vitesses de rotation et de translation de l'objet cylindrique de telle façon que la trace du faisceau décrive, à la surface du dit objet cylindrique, une trajectoire prédéterminée, en particulier une trajectoire hélicoïdale de pas déterminé.

Selon une mise en oeuvre préférentielle, le faisceau énergétique utilisé est un faisceau laser.

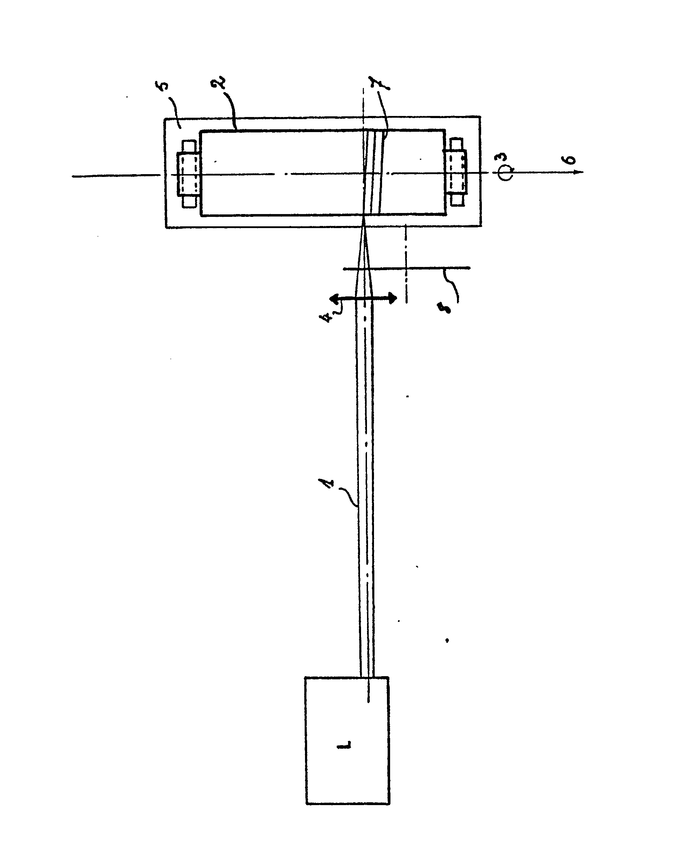

La figure jointe illustre le procédé de l'invention appliqué à un cylindre de laminoir d'axe longitudinal horizontal.

Un émetteur laser L fixe émet un faisceau 1 en direction du cylindre 2 mis en rotation selon la flèche 3. L'axe du faisceau 1 coupe l'axe du cylindre 2 sous une incidence sensiblement perpendiculaire. Le faisceau 1 est focalisé sur la surface du cylindre 2 au moyen d'une lentille convergente 4 ayant une distance focale appropriée. Le cylindre 2 est déposé dans un berceau schématisé en 5 et capable de se déplacer selon la flèche 6. Pour assurer le marquage désiré 7 du cylindre, le berceau est mis en translation selon une direction, indiquée par la flèche 6, parallèle à l'axe longitudinal du cylindre, et avec une vitesse choisie en synchronisme avec la vitesse de rotation suivant 3.

En un point judicieusement choisi de la trajectoire du faisceau laser, on peut éventuellement installer un organe, tel qu'un disque ajouré 8, capable de produire, par effet mécanique, des impulsions dans le faisceau laser.

Le procédé de l'invention permet d'opérer avec une longueur constante de la trajectoire du faisceau laser et de supprimer l'emploi de miroirs réfléchissants. Le système optique est très simple, puisqu'il peut en fait être réduit à une seule lentille. Enfin, le procédé s'applique aussi bien aux faisceaux énergétiques continus qu'aux faisceaux intermittents produits par exemple au moyen d'un organe d'interception ajouré.

## Revendications

1. Procédé de marquage d'un objet métallique cylindrique, en particulier d'un cylindre de laminoir, dans lequel on traite à l'aide d'un faisceau énergétique la surface du dit objet cylindrique mis en rotation autour de son axe longitudinal, caractérisé en ce que l'on émet le dit faisceau énergétique selon une direction qui coupe l'axe du dit objet cylindrique sous une incidence sensiblement perpendiculaire, en ce que l' on focalise le dit faisceau sur la surface du dit objet cylindrique et en ce que l'on met le dit objet cylindrique en translation suivant son axe longitudinal.

2. Procédé suivant la revendication 1, caractérisé en ce que l'on synchronise les vitesses de rotation et de translation de l'objet cylindrique de telle façon que la trace du faisceau décrive à la surface du dit objet cylindrique une trajectoire prédéterminée, en particulier une trajectoire hélicoïdale de pas déterminé.

3. Procédé suivant l'une ou l'autre des revendications 1 et 2, caractérisé en ce que le faisceau énergétique utilisé est un faisceau laser.

## Claims

1. Method for the marking of a cylindrical metal object, in particular of a rolling mill roll, in which the surface of the said cylindrical object, rotated about its longitudinal axis, is treated by means of an energy beam, characterised in that the said energy beam is emitted in a direction which intersects the axis of the said cylindrical object at a substantially perpendicular incidence, in that the said beam is focused on the surface of the said cylindrical object, and in that the said cylindrical object is moved translationally along its longitudinal axis.

2. Method according to Claim 1, characterised in that the speeds of the rotational and translational movement of the cylindrical object are synchronised such that the spot of the beam describes on the surface of the said cylindrical object a predetermined trajectory, in particular a helical trajectory of given pitch.

3. Method according to either one of Claims 1 and 2, characterised in that the energy beam used is a laser beam.

## Ansprüche

1. Verfahren zur Markierung eines zylindrischen Metallgegenstandes, besonders einer Walze in einem Walzwerk, bei dem man mit Hilfe eines Energiestrahls die Oberfläche jenes zylindrischen Gegenstandes behandelt, der um seine Längsachse in Rotation versetzt wird, dadurch gekennzeichnet, daß jener Energiestrahl in einer Richtung abgegeben wird, die die Achse jenes zylindrischen Gegenstandes unter einem im wesentlichen senkrechten Einfallswinkel schneidet, daß jener Strahl auf die Oberfläche jenes zylindrischen Gegenstandes fokussiert wird und daß jener zylindrische Gegenstand entlang seiner Längsachse verschoben wird.

2. Verfahren nach Anspruch 1, dadurch gekennzeichnet, daß die Rotationsgeschwindigkeit und die Verschiebungsgeschwindigkeit des zylindrischen Gegenstandes so synchronisiert werden, daß die Spur des Strahls auf der Oberfläche jenes zylindrischen Gegenstandes eine vorbestimmte Bahn, besonders eine spiralförmige Bahn mit festgelegter Ganghöhe beschreibt.

3. Verfahren nach Anspruch 1 oder 2, dadurch gekennzeichnet, daß es sich bei dem verwendeten Energiestrahl um einen Laserstrahl handelt.